# EUROPÄISCHE PATENTSCHRIFT

(11) **EP 3 137 637 B1**
(45) Veröffentlichungstag und Bekanntmachung des Hinweises auf die Patenterteilung: **31.10.2018**
(21) Anmeldenummer: 15702633.7
(22) Anmeldetag: 03.02.2015
(51) Int. Cl.: C22B 7/00

(54) **VERFAHREN ZUR WIEDERAUFARBEITUNG VON GEBRAUCHTEN KATALYSATOREN**
METHODS FOR REPROCESSING USED CATALYSTS
PROCÉDÉS DE RETRAITEMENT DE CATALYSEURS USAGÉS

(30) Priorität: 30.04.2014 EP 14001537
(43) Veröffentlichungstag der Anmeldung: 08.03.2017
(73) Patentinhaber: Dr Pley Engineering & Consulting (Bucharest) SRL, Municipiul Bucuresti (RO)
(72) Erfinder: PLEY, Martin, 96135 Stegaurach (DE)
(74) Vertreter: Ricker, Mathias
(86) Internationale Anmeldenummer: PCT/EP2015/000209
(87) Internationale Veröffentlichungsnummer: WO 2015/165557

(56) Entgegenhaltungen:
- CN-A- 103 088 216
- KR-A- 20120 107 550
- US-A- 4 833 113
- US-A- 5 837 635

## Beschreibung

### GEBIET DER ERFINDUNG

Die folgende Erfindung betrifft ein Verfahren zur Wiederaufbereitung von SCR-Katalysatoren, bei welchem aus dem Katalysator eine sauerstoffhaltige Titan- und Wolfram- oder Molybdänverbindung abgetrennt wird, die dann mit einer Vanadiumverbindung umgesetzt wird.

### HINTERGRUND DER ERFINDUNG

Titan-basierte Katalysatoren, insbesondere SCR (Selective Catalytic Reduction)-Katalysatoren, werden in unterschiedlichen Anwendungen zur Reduzierung von Stickoxidemissionen eingesetzt. Dabei werden im Wesentlichen zwei unterschiedliche Typen von SCR-Katalysatoren verwendet, nämlich Waben- und Plattenkatalysatoren.

Vollextrudierte Wabenkatalysatoren bestehen im Wesentlichen aus einer Mischung von Titan(IV)oxid (ca. 85 Gew.-%), Wolfram(VI)oxid (ca. 10 Gew.-%) und Vanadium(V)oxid (ca. 2 Gew.-%), bezogen auf das Gesamtgewicht der Zusammensetzung. Dieser Typ von SCR-Katalysator wird vorzugsweise zur Stickoxidminderung in Müllverbrennungsanlagen (Low-Dust Konfiguration), in stationären und mobilen Gas- und Dieselmotoren sowie in Gasturbinen eingesetzt. Dieser Katalysatortyp hat einen Marktanteil von ca. 90 % bezogen auf die beiden Typen von SCR-Katalysatoren.

Plattenkatalysatoren bestehen aus einem metallischen Trägersubstrat, vorzugsweise Streckmetall (ca. 50 Gew.-%), und einer Beschichtung aus Titan(IV)oxid (ca. 45 Gew.-%), Molybdän(VI)oxid (ca. 2,5 Gew.-%) und Vanadium(V)oxid (ca. 1 Gew.-%), bezogen auf das Gesamtgewicht des Katalysators. Dieser Katalysator wird vor allem zur Stickoxidminderung in Kohlekraftwerken und Müllverbrennungen in der High-Dust Konfiguration sowie bei der Verbrennung von Biomasse eingesetzt. Durch den Aufbau dieser Katalysatoren eignet sich dieser Katalysator besonders gut für Anwendungen mit hohen Staubfrachten.

Als weitere Komponenten können die Zusammensetzungen auch Silizium- und / oder Aluminiumverbindungen enthalten, vorzugsweise Siliziumverbindungen.

Die Lebenserwartung von SCR-Katalysatoren hängt im Wesentlichen von der Art des verwendeten Brenn- oder Treibstoffs sowie dem Staubgehalt im Abgas und der Abgastemperatur ab. Die typische Anwendungsdauer im Bereich von Kohlekraftwerken liegt bei 16.000-24.000 Betriebsstunden, jene in Schiffsdieseln bei ca. 16.000 Betriebsstunden und jene in Gasturbinen bei bis zu 50.000 Betriebsstunden.

Nach der jeweiligen Anwendungsdauer können die Katalysatoren entweder entsorgt oder durch ein chemisches Verfahren regeneriert werden.

Im Falle der Entsorgung werden Wabenkatalysatoren kostenpflichtig in einer Sondermülldeponie endgelagert. Hier können für den Betreiber Entsorgungskosten von bis zu 750,00 EURO pro Kubikmeter Katalysator anfallen. Plattenkatalysatoren können auf Grund des hohen Anteils an Edelstahl (Trägersubstrat) im Bereich der Stahlerzeugung eingeschmolzen werden.

Im Falle der Regenerierung von Wabenkatalysatoren werden diese zunächst von Anhaftungen mittels eines physikalischen Verfahrens gereinigt, vorzugsweise Ultraschall oder Druckluft, und anschließend mit einer Vanadium-haltigen Lösung nachbehandelt. Hier kann die Aktivität wieder auf ca. 90 % der ursprünglichen Aktivität erhöht werden. Die Deaktivierungsneigung dieser regenerierten Katalysatoren ist jedoch merklich höher als jene von neuen Katalysatoren. Die Kosten für regenerierte SCR Katalysatoren liegen bei ca. 60 % der Kosten neuer Katalysatoren. Ein Verfahren zur Regeneration ist in EP 0 353 467 beschrieben.

Der aktuelle Weltmarkt für Titandioxid-basierte Wabenkatalysatoren umfasst im "non-automotive" Bereich ca. 200.000 m³ pro Jahr, jener von SCR-Plattenkatalysatoren ca. 100.000 m³ pro Jahr. Vor allem durch neue Emissionsanforderungen in der VR China wird sich alleine der dortige Markt für SCR-Plattenkatalysatoren bis zum Jahr 2017 auf ca. 120.000 m³ pro Jahr steigern.

Im Bereich der Automobilindustrie in der VR China werden fortan für alle neuen Lastkraftwagen auch sehr strikte Anforderungen an die Emissionen von Stickoxiden gestellt. Dies hat wie bereits in Europa und den USA zur Folge, dass in Lastkraftwagen ebenfalls SCR-Wabenkatalysatoren eingesetzt werden müssen. Der Absatz von Lastkraftwagen in der VR China betrug im Jahr 2011 ca. 3,5 Mio. Fahrzeuge. Auch hieraus ergibt sich ein erheblicher Mehrbedarf in den kommenden Jahren. Dies hat die Folge, dass gebrauchte Katalysatoren nach einer bestimmten Betriebsdauer entsorgt werden müssen.

Der stark anwachsende Bedarf im Bereich von Titandioxid-basierten SCR-Katalysatoren hat in den vergangenen Jahren zu einem Anstieg der Rohstoffpreise geführt, da die Kapazitäten der Produzenten von insbesondere Titandioxid in der Anatas-Modifikation begrenzt sind. Hier ist es zu erwarten, dass es in den kommenden Jahren zu einem Rohstoffengpass kommen wird.

KR 2012 0107550 offenbart ein Verfahren zum Wiederaufbereiten von gebrauchten Denitrifikationskatalysatoren, um katalytische Rohmaterialien aus diesen gebrauchten Katalysatoren zu erhalten und diese katalytischen Rohmaterialien zur Herstellung von Denitrifikationskatalysatoren zu verwenden. Das Verfahren umfasst die folgenden Schritte: Gebrauchte Denitrifikationskatalysatoren werden pulverisiert, die pulverisierten Materialien werden unter Verwendung einer Nasskugelmühle gemahlen, es wird Ammoniak in die gemahlenen Materialien eingeführt und die gemahlenen Materialien mit dem Ammoniak primär gewaschen, die primär gewaschenen Materialien werden sekundär unter Verwendung einer Säurelösung gewaschen, die mindestens eine Säure aus der Gruppe Salzsäure, Salpetersäure und Oxalsäure enthält, und die sekundär gewaschenen Materialien werden getrocknet, wobei die Rohmaterialien für Denitrifikationskatalysatoren erhalten werden.

### AUFGABEN DER ERFINDUNG

Aufgabe des hier vorgestellten neuen Verfahrens ist es, aus gebrauchten SCR-Katalysatoren Rohstoffe, die zur Herstellung dieser Katalysatoren verwendet wurden, derart zurückzugewinnen, dass die zurückgewonnenen Rohstoffe für die Herstellung neuer Katalysatoren wiederverwendet werden können.

### ZUSAMMENFASSUNG DER ERFINDUNG

Diese Aufgabe wird gelöst wie in Anspruch 1 definiert. Vorteilhafte Ausführungsformen sind in den davon abhängigen Patentansprüchen definiert.

Demzufolge betrifft die Erfindung ein Verfahren zur Wiederaufbereitung eines gebrauchten Katalysators, vorzugsweise eines SCR-Katalysators, der eine sauerstoffhaltige Verbindung des Titans, des Vanadiums und mindestens eines der Elemente Molybdän oder Wolfram umfasst, umfassend mindestens die Stufe (T4):
(T4) Erhitzen einer festen Fraktion umfassend eine sauerstoffhaltige Verbindung des Titans und mindestens eines der Elemente Wolfram oder Molybdän in Gegenwart einer Vanadiumverbindung bei einer Temperatur ≥ 200 °C.
   und weiter umfassend vor Stufe (T4) die Stufen (T1) bis (T3):
(T1) Inkontaktbringen des gebrauchten Katalysators mit wässeriger Base, wobei eine wasserhaltige Masse erhalten wird, welche umfasst: eine flüssige Fraktion, welche ein wasserlösliches Material umfasst, vorzugsweise wobei das wasserlösliche Material eine Verbindung des Vanadiums umfasst; und eine feste Fraktion, welche ein wasserunlösliches Material umfasst, vorzugsweise wobei das wasserunlösliche Material eine sauerstoffhaltige Verbindung des Titans und mindestens eines der Elemente Molybdän und Wolfram umfasst;
(T2) Abtrennen der festen Fraktion von der flüssigen Fraktion der Stufe (T1);
(T3) Inkontaktbringen der abgetrennten festen Fraktion aus Stufe (T2) mit einer Vanadiumverbindung;
   wobei die wässerige Base der Stufe (T1) ausgewählt ist aus der Gruppe bestehend aus: wässeriges Alkalihydroxid, wässeriges Erdalkalihydroxid, wässeriges Alkalihydrogencarbonat, wässeriges Alkalicarbonat, wässeriges Erdalkalicarbonat, wässeriges C₁-C₄-Alkylamin, oder wässeriger Aminoalkohol, oder eine Mischung aus zwei oder mehr davon.

In einer Ausführungsform ist der Aminoalkohol ausgewählt aus der Gruppe bestehend aus: Mono-, Di- und Triethanolamin, Dimethylaminoethanol, Diethylaminoethanol, *N*-Methyldiethanolamin oder Mono-, Di- und Triisopropanolamin, oder zwei oder mehr davon.

In einer Ausführungsform ist der Aminoalkohol Monoethanolamin (Aminoethanol).

In einer Ausführungsform liegt in Stufe (T1) die Temperatur im Bereich von 30 bis 100 °C.

In einer Ausführungsform ist die Vanadiumverbindung eine wässerige Lösung oder Suspension einer sauerstoffhaltigen Vanadiumverbindung.

In einer Ausführungsform ist die Vanadiumverbindung Ammoniumvanadat oder umfasst Ammoniumvanadat.

In einer Ausführungsform erfolgt das Erhitzen der Stufe (T4) in einem Temperaturbereich von 200 bis 1.000 °C oder 300 bis 900 °C oder 400 bis 800 °C oder 500 bis 700 °C.

In einer Ausführungsform umfasst das Verfahren der Stufe (T1) mindestens eine der Stufen (R1) bis (R7):
(R1) mechanische Reinigung des gebrauchten Katalysators, vorzugsweise durch Ultraschall oder Gas unter Druck, vorzugsweise Druckluft;
(R2) Entfernen des gebrauchten Katalysators aus einer Katalysatorvorrichtung;
(R3) Zerkleinern des gebrauchten Katalysators, vorzugsweise auf eine Korngröße von 5 µm bis 10 mm oder 5 µm bis 1 mm oder 5 µm bis 100 µm;
(R4) Zerkleinern des gebrauchten Katalysators und Abtrennen des zerkleinerten gebrauchten Katalysators von Begleitmaterialien, welche im zerkleinerten gebrauchten Katalysator enthalten sind;
(R5) Inkontaktbringen des in Stufe (T1) eingesetzten gebrauchten Katalysators oder des in Stufe (R3) erhaltenen zerkleinerten gebrauchten Katalysators oder des in Stufe (R4) erhaltenen abgetrennten zerkleinerten gebrauchten Katalysators mit einer Säure;
(R6) Abtrennen des in Stufe (R5) erhaltenen festen Produkts;
(R7) Verwenden des in einer der Stufen (R1) bis (R6) erhaltenen Produkts in Stufe (T1).

In einer Ausführungsform ist die Säure der Stufe (R5) ausgewählt aus der Gruppe bestehend aus: Salzsäure, schweflige Säure, Schwefelsäure, Phosphorsäure, Ameisensäure, Essigsäure, Chloressigsäure, Oxalsäure, Malonsäure, Zitronensäure, Weinsäure, Methansulfonsäure, Benzolsulfonsäure, Toluolsulfonsäure, Sulfanylsäure, Salpetersäure, oder zwei oder mehr davon.

In einer Ausführungsform liegt in Stufe (R5) die Temperatur im Bereich von 10 bis 80 °C.

In einer Ausführungsform umfasst die Stufe (T2) mindestens die Stufe (R6):
(R6) Waschen der abgetrennten festen Fraktion.

In einer Ausführungsform umfasst in Stufe (T1) das wasserlösliche Material eine Verbindung des Vanadiums; und wobei das wasserlösliche Material eine sauerstoffhaltige Verbindung des Titans und mindestens eines der Elemente Molybdän und Wolfram umfasst.

In einer weiteren Ausführungsform ist der gebrauchte Katalysator ein SCR-Katalysator.

Die Erfindung betrifft auch ein Verfahren zur Herstellung eines Katalysators oder SCR-Katalysators, umfassend ein Verfahren wie vorstehend definiert, und weiter umfassend mindestens eine der Stufen (W1), (W2) oder (W3):
(W1) Aufbringen des nach Stufe (T4) erhaltenen Produkts auf einen Träger;
(W2) Extrudieren des nach Stufe (T4) erhaltenen Produkts zu einer Wabe;
(W3) Zumischen des nach Stufe (T4) erhaltenen Produkts zu Ausgangsprodukten zur Herstellung eines Katalysators, wobei die Ausgangsprodukte zumindest ausgewählt sind aus Titandioxid oder Wolframoxid oder Molybdänoxid.

### DETAILLIERTE BESCHREIBUNG DER ERFINDUNG

Die Erfindung betrifft ein Verfahren zur Wiederaufbereitung eines gebrauchten Katalysators, vorzugsweise eines SCR-Katalysators, der eine sauerstoffhaltige Verbindung des Titans, des Vanadiums und mindestens eines der Elemente Molybdän oder Wolfram umfasst.

Der Begriff *"sauerstoffhaltige Verbindung des Titans, des Vanadiums und mindestens eines der Elemente Molybdän oder Wolfram"* schließt ein, dass die Oxide nebeneinander vorliegen, vorzugsweise aber in Form von Mischoxiden. Insbesondere schließt dieser Begriff ein, dass zumindest die Oxide von Titan und Vanadium in Form von Mischoxiden vorliegen, was bedeutet, dass Vanadium Gitterplätze im Oxid des Titans einnehmen kann.

Erfindungsgemäß umfasst das Verfahren die Stufe (T4), in welcher eine feste Fraktion umfassend eine sauerstoffhaltige Verbindung des Titans und mindestens eines der Elemente Wolfram oder Molybdän, in Gegenwart einer Vanadiumverbindung bei einer Temperatur ≥ 200 °C erhitzt wird, wobei die feste Fraktion vorzugsweise durch die im Folgenden erläuterten Verfahrensschritte (T1) bis (T4) erhalten wird.

Vorzugsweise wird vor Durchführung der Stufe (T4) in Stufe (T1) der gebrauchte Katalysators mit wässeriger Base in Kontakt gebracht. Dabei wird eine wasserhaltige Masse erhalten, welche eine feste Fraktion und eine flüssige Fraktion umfasst.

Die flüssige Fraktion umfasst ein wasserlösliches Material, vorzugsweise wobei das wasserlösliche Material eine Verbindung des Vanadiums umfasst.

Die feste Fraktion umfasst ein wasserunlösliches Material, vorzugsweise wobei das wasserunlösliche Material eine sauerstoffhaltige Verbindung des Titans und mindestens eines der Elemente Molybdän und Wolfram umfasst.

Vorzugsweise wird die in Stufe (T1) eingesetzte Base ausgewählt aus der Gruppe bestehend aus: wässeriges Alkalihydroxid, wässeriges Erdalkalihydroxid, wässeriges Alkalihydrogencarbonat, wässeriges Alkalicarbonat, wässeriges Erdalkalicarbonat, wässeriges Ammoniumcarbonat oder Ammoniumacetat, wässeriger Ammoniak, wässeriges C₁-C₄-Alkylamin, oder wässeriger Aminoalkohol, oder eine Mischung aus zwei oder mehr davon.

Vorzugsweise ist der Aminoalkohol ausgewählt aus der Gruppe bestehend aus: Mono-, Di- und Triethanolamin, Dimethylaminoethanol, Diethylaminoethanol, N-Methyldiethanolamin oder Mono-, Di- und Triisopropanolamin, oder zwei oder mehr davon.

In einer besonders bevorzugten Ausführung ist der Aminoalkohol Monoethanolamin (Aminoethanol).

Vorzugsweise liegt die Temperatur der Stufe (T1) im Bereich von 30 bis 150 °C, weiter bevorzugt 30 bis 100 °C oder 60 bis 100 °C. Die Stufe (T1) kann gegebenenfalls unter Druck wie auch drucklos durchgeführt werden.

Erfindungsgemäß wird in Stufe (T2) die feste Fraktion von der flüssigen Fraktion der Stufe (T1) abgetrennt.

Das Abtrennen kann nach bekannten Verfahren erfolgen, vorzugsweise durch Filtration, Zentrifugieren, Sedimentieren und Abgießen des Überstands. Der abgetrennte Rückstand wird bei Bedarf mit Wasser gewaschen.

Erfindungsgemäß wird in Stufe (T3) die abgetrennte feste Fraktion aus Stufe (T2) mit einer Vanadiumverbindung in Kontakt gebracht und danach gemäß der Stufe (T4) erhitzt.

Vorzugsweise wird in Stufe (T3) die Vanadiumverbindung mit einer wässerigen Lösung oder Suspension einer sauerstoffhaltigen Vanadiumverbindung in Kontakt gebracht.

Vorzugsweise ist die Vanadiumverbindung Ammoniumvanadat oder umfasst Ammoniumvanadat.

Vorzugsweise wird in Stufe (T3) das Inkontaktbringen durch Besprühen der festen Fraktion mit der Vanadiumverbindung, vorzugsweise in wässeriger Form, oder durch Übergießen oder Tränken bewerkstelligt.

Erfindungsgemäß wird in Stufe (T4) die in Stufe (T3) mit der Vanadiumverbindung in Kontakt gebrachte feste Fraktion umfassend eine sauerstoffhaltige Verbindung des Titans und mindestens eines der Elemente Wolfram oder Molybdän bei einer Temperatur ≥ 200 °C erhitzt.

Vorzugsweise erfolgt das Erhitzen so, dass eine Festkörperreaktion zwischen der festen Fraktion und der Vanadiumverbindung erfolgt. Vorzugsweise werden bei dieser Festkörperreaktion Vanadiumionen in das Gitter der sauerstoffhaltigen Titanverbindung eingebaut. Dies kann durch übliche röntgenographische Untersuchungen überprüft werden.

Vorzugsweise erfolgt das Erhitzen der Stufe (T4) in einem Temperaturbereich von 300 bis 1.000 °C oder 400 bis 800 °C oder 500 bis 700 °C.

Das Erhitzen kann vorzugsweise in herkömmlichen Tunnelöfen, Drehrohröfen oder Muffelöfen erfolgen.

Das Verfahren der Stufen (T1) bis (T4) kann weitere Verfahrensschritte aufweisen.

Vorzugsweise umfasst das Verfahren in Stufe (T1) zudem mindestens eine der Stufen (R1) bis (R7):
(R1) mechanische Reinigung des gebrauchten Katalysators;
(R2) Entfernen des gebrauchten Katalysators aus einer Katalysatorvorrichtung;
(R3) Zerkleinern des gebrauchten Katalysators, vorzugsweise auf eine Korngröße von 5 µm bis 10 mm oder 5 µm bis 1 mm oder 5 µm bis 100 µm;
(R4) Zerkleinern des gebrauchten Katalysators und Abtrennen des zerkleinerten gebrauchten Katalysators von Begleitmaterialien, welche im zerkleinerten gebrauchten Katalysator enthalten sind;
(R5) Inkontaktbringen des in Stufe (T1) eingesetzten gebrauchten Katalysators oder des in Stufe (R3) erhaltenen zerkleinerten gebrauchten Katalysators oder des in Stufe (R4) erhaltenen abgetrennten zerkleinerten gebrauchten Katalysators mit einer Säure;
(R6) Abtrennen des in Stufe (R5) erhaltenen festen Produkts;
(R7) Verwenden des in einer der Stufen (R1) bis (R6) erhaltenen Produkts in Stufe (T1).

Vor Durchführung des eigentlichen erfindungsgemäßen Verfahrens können somit in Stufe (R1) die gebrauchten SCR-Katalysatoren in einem ersten Schritt mechanisch von anhaftenden Stoffen gereinigt werden, vorzugsweise durch Ultraschall oder Gas unter Druck, vorzugsweise Druckluft.

In einem zweiten Schritt können die Katalysatoren den üblicherweise vorhandenen metallischen Gehäusen oder Halterungen entnommen werden [Stufe (R2)].

Im Falle der Plattenkatalysatoren kann noch eine physikalische Trennung der keramischen Beschichtung vom metallischen Trägersubstrat erfolgen.

Anschließend können die SCR-Katalysatoren bzw. die bei Plattenkatalysatoren vom metallischen Trägersubstrat getrennte keramische Beschichtungsmasse, mechanisch zu einem Pulver bzw. zu kleinen Stücken zerkleinert werden [Stufe (R3)].

Vorzugsweise kann das Zerkleinern der Stufe (R3) in einer Kugelmühle oder einer Hammermühle erfolgen.

Vorzugsweise wird der gebrauchte Katalysator auf eine Korngröße im Bereich von 5 µm bis 10 mm, weiter bevorzugt 5 µm bis 1 mm, und noch mehr bevorzugt 5 µm bis 100 µm zerkleinert. Die Korngrößenverteilung kann dabei nach üblichen Laserstreulicht-Verfahren ermittelt werden.

Vorzugsweise kann auch in Stufe (R3) der gebrauchte Katalysator zerkleinert und der zerkleinerte gebrauchte Katalysator von Begleitmaterialien, welche im zerkleinerten gebrauchten Katalysator enthalten sind, abgetrennt werden, wobei die Stufe (R4) erhalten wird.

Zur Entfernung von leicht löslichen Bestandteilen oder sonstig anhaftenden Verunreinigungen kann die die zerkleinerte keramische Masse mit Wasser gewaschen werden, vorzugsweise einer wässrigen Säure mit einem p_{H}-Wert zwischen 1 und 6,8 [Stufe (R5)].

Vorzugsweise ist die Säure der Stufe (R5) ausgewählt aus der Gruppe bestehend aus: Salzsäure, schweflige Säure, Schwefelsäure, Salpetersäure, Phosphorsäure, Ameisensäure, Essigsäure, Chloressigsäure, Oxalsäure, Malonsäure, Zitronensäure, Weinsäure, Methansulfonsäure, Benzolsulfonsäure, Toluolsulfonsäure, Sulfanylsäure, oder zwei oder mehr davon.

Vorzugsweise liegt in Stufe (R5) die Temperatur im Bereich von 10 bis 60 °C.

Die zerkleinerte keramische Masse kann auch mit Wasser, vorzugsweise einer wässrigen Säure mit einem p_{H}-Wert zwischen 1 und 6,8, in Suspension behandelt werden.

Anschließend können die nicht-löslichen Bestandteile der Suspension vom wässrigen Medium getrennt werden, vorzugsweise durch Filtration, Zentrifugieren, Sedimentieren und Abgießen des Überstands [Stufe (R6)]. Der abgetrennte Rückstand wird bei Bedarf mit Wasser gewaschen.

Das in einer der Stufen (R1) bis (R6) erhaltene Produkt kann als Ausgangsprodukt in Stufe (T1) eingesetzt werden.

Vorzugsweise umfasst Stufe (T2) mindestens die Stufe (R8):
(R8) Waschen der abgetrennten festen Fraktion, vorzugsweise mit Wasser.

Ein weiterer Gegenstand der Erfindung ist auch ein Verfahren zur Herstellung eines Katalysators oder SCR-Katalysators, umfassend ein Verfahren wie oben definiert, und weiter umfassend mindestens eine der Stufen (W1), (W2) oder (W3):
(W1) Aufbringen des nach Stufe (T4) erhaltenen Produkts auf einen Träger;
(W2) Extrudieren des nach Stufe (T4) erhaltenen Produkts zu einer Wabe;
(W3) Zumischen des nach Stufe (T4) erhaltenen Produkts zu Ausgangsprodukten zur Herstellung eines Katalysators, wobei die Ausgangsprodukte zumindest ausgewählt sind aus Titandioxid oder Wolframoxid oder Molybdänoxid.

Die Durchführung der Stufen (W1) bis (W3) innerhalb des erfindungsgemäßen Verfahrens erfolgt analog zu Verfahren, welche bekannt sind, und braucht deshalb hier nicht näher erläutert zu werden.

## Patentansprüche

1. Verfahren zur Wiederaufbereitung eines gebrauchten Katalysators, der eine sauerstoffhaltige Verbindung des Titans, des Vanadiums und mindestens eines der Elemente Molybdän oder Wolfram umfasst, umfassend mindestens die Stufe (T4):
(T4) Erhitzen einer festen Fraktion umfassend eine sauerstoffhaltige Verbindung des Titans und mindestens eines der Elemente Wolfram oder Molybdän in Gegenwart einer Vanadiumverbindung bei einer Temperatur ≥ 200 °C;
und weiter umfassend die Stufen (T1) bis (T3) vor Stufe (T4):
(T1) Inkontaktbringen des gebrauchten Katalysators mit wässeriger Base, wobei eine wasserhaltige Masse erhalten wird, welche umfasst:
eine flüssige Fraktion, welche ein wasserlösliches Material umfasst, und
eine feste Fraktion, welche ein wasserunlösliches Material umfasst;
(T2) Abtrennen der festen Fraktion von der flüssigen Fraktion der Stufe (T1);
(T3) Inkontaktbringen der abgetrennten festen Fraktion aus Stufe (T2) mit einer Vanadiumverbindung;
wobei die wässerige Base der Stufe (T1) ausgewählt ist aus der Gruppe bestehend aus: wässeriges Alkalihydroxid, wässeriges Erdalkalihydroxid, wässeriges Alkalihydrogencarbonat, wässeriges Alkalicarbonat, wässeriges Erdalkalicarbonat, wässeriges C₁-C₄-Alkylamin, oder wässeriger Aminoalkohol, oder eine Mischung aus zwei oder mehr davon.

2. Verfahren nach Anspruch 1, wobei der Aminoalkohol ausgewählt ist aus der Gruppe bestehend aus: Mono-, Di- und Triethanolamin, Dimethylaminoethanol, Diethylaminoethanol, *N*-Methyldiethanolamin oder Mono-, Di- und Triisopropanolamin, oder zwei oder mehr davon.

3. Verfahren nach Anspruch 1 oder 2, wobei der Aminoalkohol Monoethanolamin (Aminoethanol) ist.

4. Verfahren nach einem der Ansprüche 1 bis 3, wobei in Stufe (T1) die Temperatur im Bereich von 30 bis 100 °C liegt.

5. Verfahren nach einem der vorstehenden Ansprüche, wobei die Vanadiumverbindung eine wässerige Lösung oder Suspension einer sauerstoffhaltigen Vanadiumverbindung ist.

6. Verfahren nach einem der vorstehenden Ansprüche, wobei die Vanadiumverbindung Ammoniumvanadat ist oder Ammoniumvanadat umfasst.

7. Verfahren nach einem der vorstehenden Ansprüche, wobei das Erhitzen der Stufe (T4) in einem Temperaturbereich von 200 bis 1.000 °C oder 300 bis 900 °C oder 400 bis 800 °C oder 500 bis 700 °C erfolgt.

8. Verfahren nach einem der Ansprüche 1 bis 7, wobei das Verfahren der Stufe (T1) mindestens eine der Stufen (R1) bis (R7) umfasst:
(R1) mechanische Reinigung des gebrauchten Katalysators, vorzugsweise durch Ultraschall oder Gas unter Druck, vorzugsweise Druckluft;
(R2) Entfernen des gebrauchten Katalysators aus einer Katalysatorvorrichtung;
(R3) Zerkleinern des gebrauchten Katalysators, vorzugsweise auf eine Korngröße von 5 µm bis 10 mm oder 5 µm bis 1 mm oder 5 µm bis 100 µm;
(R4) Zerkleinern des gebrauchten Katalysators und Abtrennen des zerkleinerten gebrauchten Katalysators von Begleitmaterialien, welche im zerkleinerten gebrauchten Katalysator enthalten sind;
(R5) Inkontaktbringen des in Stufe (T1) eingesetzten gebrauchten Katalysators oder des in Stufe (R3) erhaltenen zerkleinerten gebrauchten Katalysators oder des in Stufe (R4) erhaltenen abgetrennten zerkleinerten gebrauchten Katalysators mit einer Säure;
(R6) Abtrennen des in Stufe (R5) erhaltenen festen Produkts;
(R7) Verwenden des in einer der Stufen (R1) bis (R6) erhaltenen Produkts in Stufe (T1).

9. Verfahren nach Anspruch 8, wobei die Säure der Stufe (R5) ausgewählt ist aus der Gruppe bestehend aus: Salzsäure, schweflige Säure, Schwefelsäure, Phosphorsäure, Ameisensäure, Essigsäure, Chloressigsäure, Oxalsäure, Malonsäure, Zitronensäure, Weinsäure, Methansulfonsäure, Benzolsulfonsäure, Toluolsulfonsäure, Sulfanylsäure, oder zwei oder mehr davon.

10. Verfahren nach einem der Ansprüche 7 bis 9, wobei in Stufe (R5) die Temperatur im Bereich von 10 bis 80 °C liegt

11. Verfahren nach einem der Ansprüche 1 bis 10, wobei die Stufe (T2) mindestens die Stufe (R6) umfasst:
(R6) Waschen der abgetrennten festen Fraktion.

12. Verfahren nach einem der vorstehenden Ansprüche, wobei in Stufe (T1) das wasserlösliche Material eine Verbindung des Vanadiums umfasst; und wobei das wasserunlösliche Material eine sauerstoffhaltige Verbindung des Titans und mindestens eines der Elemente Molybdän und Wolfram umfasst.

13. Verfahren nach einem der vorstehenden Ansprüche, wobei der gebrauchte Katalysator ein SCR-Katalysator ist.

14. Verfahren zur Herstellung eines Katalysators oder SCR-Katalysators, umfassend ein Verfahren wie in einem der Ansprüche 1 bis 13 definiert, und weiter umfassend mindestens eine der Stufen (W1), (W2) oder (W3):
(W1) Aufbringen des nach Stufe (T4) erhaltenen Produkts auf einen Träger;
(W2) Extrudieren des nach Stufe (T4) erhaltenen Produkts zu einer Wabe;
(W3) Zumischen des nach Stufe (T4) erhaltenen Produkts zu Ausgangsprodukten zur Herstellung eines Katalysators, wobei die Ausgangsprodukte zumindest ausgewählt sind aus Titandioxid oder Wolframoxid oder Molybdänoxid.

## Claims

1. Process for the recovery of a used catalyst comprising an oxygenated compound of titanium, vanadium and at least one of the molybdenum or tungsten elements comprising at least the step (T4):
(T4) heating a solid fraction comprising an oxygen-containing compound of titanium and at least one of the elements tungsten or molybdenum in presence of a vanadium compound at a temperature of ≥ 200 °C;
and further comprising steps (T1) to (T3) before step (T4):
(T1) contacting the used catalyst with aqueous base, wherein a water-containing mass is obtained, which comprises:
a liquid fraction comprising a water-soluble material, and
a solid fraction comprising a water insoluble material;
(T2) separating the solid fraction from the liquid fraction of step (T1);
(T3) contacting the separated solid fraction from step (T2) with a vanadium compound;
wherein the aqueous base of step (T1) is selected from the group consisting from: aqueous alkali metal hydroxydioxide, aqueous alkaline earth hydroxide, aqueous alkali hydrogen carbonate, aqueous alkali carbonate, aqueous alkaline earth carbonate, aqueous C₁₋₄-alkylamine, or aqueous aminoalcohol, or a mixture of two or more therefrom.

2. The method of claim 1, wherein the aminoalcohol is selected from the Group consisting of: mono-, di- and triethanolamine, dimethylaminoethanol, diethylaminoethanol, N-methyldiethanolamine or mono-, di- and triisopropanolamine, or two or more therefrom.

3. The method of claim 1 or 2, wherein the aminoalcohol is monoethanolamine (aminoethanol).

4. Method according to one of claims 1 to 3, wherein in step (T1) the temperature is in the range of 30 to 100 °C.

5. Process according to one of the preceding claims, wherein the vanadium compound is an aqueous solution or suspension of an oxygen-containing vanadium compound.

6. Process according to one of the preceding claims, wherein the vanadium compound is ammonium vanadate or comprises ammonium vanadate.

7. A process according to any one of the preceding claims, wherein the heating of the step (T4) takes place in a temperature range of 200 to 1000 °C or 300 to 900 °C or 400 to 800 °C or 500 to 700 °C.

8. Method according to one of claims 1 to 7, wherein the process of the step (T1) at least one of the stages (R1) to (R7) comprises:
(R1) mechanical purification of the used catalyst, preferably by ultrasound or gas under pressure, preferably compressed air;
(R2) removing the used catalyst from a catalyst device;
(R3) comminuting the used catalyst, preferably to a grain size of from 5 µm to 10 mm or 5 µm to 1 mm or 5 µm to 100 µm;
(R4) comminuting the used catalyst and separating the comminuted used catalyst from accompanying materials, which are present in the comminuted used catalyst;
(R5) contacting the used catalyst used in step (T1) or the comminuted used catalyst obtained in step (R3) or the separated comminuted used catalyst obtained in step (R4) with an acid;
(R6) separating the solid product obtained in step (R5);
(R7) using the product obtained in any one of steps (R1) to (R6) in step (T1).

9. The method of claim 8, wherein the acid of step (R5) is selected from of the group consisting of: hydrochloric acid, sulphurous acid, sulfuric acid, phosphoric acid, formic acid, acetic acid, chloroacetic acid, oxalic acid, malonic acid, citric acid, tartaric acid, methanesulfonic acid, benzenesulfonic acid, toluenesulfonic acid, sulfanylic acid, or two or more therefrom.

10. Method according to any one of claims 7 to 9, wherein in step (R5) the temperature is in the range of 10 to 80 °C.

11. Method according to any one of claims 1 to 10, wherein the step (T2) at least comprises the step (R6) comprises:
(R6) washing the separated solid fraction.

12. Method according to one of the preceding claims, wherein in step (T1) the water-soluble material comprises a compound of vanadium; and where the water-insoluble material an oxygenated compound of titanium and at least one of the elements comprises molybdenum and tungsten.

13. The method according to any one of the preceding claims, wherein the used catalyst is an SCR catalyst.

14. A process for preparing a catalyst or SCR catalyst, comprising a method as defined in any one of claims 1 to 13, and further comprising at least one of the stages (W1), (W2) or (W3):
(W1) applying the product obtained according to step (T4) to a support;
(W2) extruding the product obtained after step (T4) into a honeycomb;
(W3) mixing the product obtained according to step (T4) to starting materials for producing a catalyst, wherein the starting materials are at least selected from titanium dioxide or tungsten oxide or molybdenum oxide.

## Revendications

1. Procédé de retraitement d'un catalyseur usagé, qui comprend un composé oxygéné de titane, de vanadium et au moins l'un des éléments molybdène ou tungstène, comprenant au moins l'étape (T4) de :
(T4) chauffage d'une fraction solide comprenant un composé oxygéné de titane et au moins l'un des éléments tungstène ou molybdène en présence d'un composé de vanadium à une température ≥ 200 °C ; et comprenant en outre les étapes (T1) à (T3) précédant l'étape (T4) de :
(T1) mise en contact du catalyseur usagé avec une base aqueuse, une masse contenant de l'eau étant obtenue, laquelle comprend :
une fraction liquide qui comprend une matière hydrosoluble et une fraction solide qui comprend une matière non soluble dans l'eau ;
(T2) séparation de la fraction solide de la fraction liquide de l'étape (T1) ;
(T3) mise en contact de la fraction solide séparée de l'étape (T2) avec un composé de vanadium ;
dans lequel la base aqueuse de l'étape (T1) est choisie dans le groupe constitué de : hydroxyde alcalin aqueux, hydroxyde alcalino-terreux aqueux, hydrogénocarbonate alcalin aqueux, carbonate alcalin aqueux, carbonate alcalino-terreux aqueux, amine alkylée en C₁-C₄ aqueuse, ou aminoalcool aqueux, ou un mélange de deux de ceux-ci ou plus.

2. Procédé selon la revendication 1, dans lequel l'aminoalcool est choisi dans le groupe constitué de : mono-, di- et triéthanolamine, diméthylaminoéthanol, diéthylamino-éthanol, *N*-méthyldiéthanolamine ou mono-, di- et triisopropanolamine, ou deux de ceux-ci ou plus.

3. Procédé selon la revendication 1 ou 2, dans lequel l'aminoalcool est la monoéthanolamine (aminoéthanol).

4. Procédé selon l'une des revendications 1 à 3, dans lequel, à l'étape (T1), la température se situe dans la plage de 30 à 100 °C.

5. Procédé selon l'une des revendications précédentes, dans lequel le composé de vanadium est une solution ou suspension aqueuse d'un composé oxygéné de vanadium.

6. Procédé selon l'une des revendications précédentes, dans lequel le composé de vanadium est le vanadate d'ammonium ou comprend du vanadate d'ammonium.

7. Procédé selon l'une des revendications précédentes, dans lequel le chauffage de l'étape (T4) s'effectue dans une plage de températures de 200 à 1000 °C, ou de 300 à 900 °C ou de 400 à 800 °C ou de 500 à 700 °C.

8. Procédé selon l'une des revendications 1 à 7, dans lequel le procédé de l'étape (T1) comprend au moins l'une des étapes (R1) à (R7) :
(R1) purification mécanique du catalyseur usagé, de préférence par ultrason ou gaz sous pression, de préférence air comprimé ;
(R2) retrait du catalyseur usagé hors d'un dispositif catalytique ;
(R3) broyage du catalyseur usagé, de préférence à une taille de grains de 5 µm à 10 mm ou de 5 µm à 1 mm ou de 5 µm à 100 µm ;
(R4) broyage du catalyseur usagé et séparation du catalyseur usagé broyé et des matériaux supports, qui sont présents dans le catalyseur usagé broyé ;
(R5) mise en contact du catalyseur usagé mis en oeuvre à l'étape (T1) ou du catalyseur usagé broyé obtenu à l'étape (R3) ou du catalyseur usagé broyé séparé obtenu à l'étape (R4) avec un acide ;
(R6) séparation du produit solide obtenu à l'étape (R5) ;
(R7) utilisation du produit obtenu à partir des étapes (R1) à (R6) dans l'étape (T1).

9. Procédé selon la revendication 8, dans lequel l'acide de l'étape (R5) est choisi dans le groupe constitué de : acide chlorhydrique, acide sulfureux, acide sulfurique, acide phosphorique, acide formique, acide acétique, acide chloroacétique, acide oxalique, acide malonique, acide citrique, acide tartrique, acide méthanesulfonique, acide benzènesulfonique, acide toluènesulfonique, acide sulfanylique, ou deux de ceux-ci ou plus.

10. Procédé selon l'une des revendications 7 à 9, dans lequel, à l'étape (R5), la température se situe dans la plage de 10 à 80 °C.

11. Procédé selon l'une des revendications 1 à 10, dans lequel l'étape (T2) comprend au moins l'étape (R6) de :
(R6) lavage de la fraction solide séparée.

12. Procédé selon l'une des revendications précédentes, dans lequel, à l'étape (T1), la matière hydrosoluble comprend un composé de vanadium ; et dans lequel la matière insoluble dans l'eau comprend un composé oxygéné de titane et au moins l'un des éléments molybdène et tungstène.

13. Procédé selon l'une des revendications précédentes, dans lequel le catalyseur usagé est un catalyseur SCR.

14. Procédé de production d'un catalyseur ou d'un catalyseur SCR, comprenant un procédé tel que défini dans l'une des revendications 1 à 13 et comprenant en outre au moins l'une des étapes (W1), (W2) ou (W3) de :
(W1) application du produit obtenu après l'étape (T4) sur un support ;
(W2) extrusion du produit obtenu après l'étape (T4) pour donner un nid d'abeille ;
(W3) addition du produit obtenu après l'étape (T4) aux produits de départ pour la production d'un catalyseur, les produits de départ étant au moins choisis parmi le dioxyde de titane ou l'oxyde de tungstène ou l'oxyde de molybdène.
